(19) Europäisches Patentamt
European Patent Office
Office européen des brevets

(11) **EP 4 614 182 A1**

(12) **EUROPEAN PATENT APPLICATION**
published in accordance with Art. 153(4) EPC

(43) Date of publication:
**10.09.2025 Bulletin 2025/37**

(21) Application number: **23885344.4**

(22) Date of filing: **23.08.2023**

(51) International Patent Classification (IPC):
**G01S 7/03** (2006.01)　　**B60R 13/00** (2006.01)
**B60S 1/62** (2006.01)　　**G01S 7/40** (2006.01)
**H01Q 1/42** (2006.01)

(52) Cooperative Patent Classification (CPC):
**B60R 13/00; B60S 1/62; G01S 7/03; G01S 7/40;
H01Q 1/42**

(86) International application number:
**PCT/JP2023/030386**

(87) International publication number:
**WO 2024/095574 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022 JP 2022177108**

(71) Applicant: **Sankei Giken Kogyo Co., Ltd.
Tokyo 115-8555 (JP)**

(72) Inventors:
• **KINEMUCHI Takahiro
Tokyo 115-8555 (JP)**
• **KOBAYASHI Hiroyuki
Tokyo 115-8555 (JP)**
• **SAWADA Yuki
Tokyo 115-8555 (JP)**

(74) Representative: **Murgitroyd & Company
165-169 Scotland Street
Glasgow G5 8PL (GB)**

(54) **RADOME**

(57)　　A radome 1 comprises a radome body 2 formed of an electromagnetic-wave transmitting first resin base material, a snow-melting base 3 formed of an electromagnetic-wave transmitting second resin base material having a refractive index mutually matching the refractive index of the first resin base material, and a heater wire 4 laid in an electromagnetic-wave transmitting region R of the snow-melting base 3 and secured to the snow-melting base 3. A recess part 21 recessed in an electromagnetic-wave transmitting direction is formed in a local region of the radome body 2 covering the electromagnetic-wave transmitting region R. The snow-melting base 3 is fitted in the recess part 21 in such a manner as to bury the heater wire 4 internally. It is possible to prevent breakage and failure of a snow-melting part by eliminating a snow-melting part wholly projecting from a radome body locally.

Fig.4

**Description**

TECHNICAL FIELD

The present invention relates to a radome for radar device provided in front of a vehicle-mounted radar device, for example, particularly relates to a radome having a snow-melting function.

BACKGROUND ART

In a radome conventionally known as a radome having a snow-melting function, a heater wire is laid in a millimeter-wave transmitting region. Such a radome includes a vehicle front grille disclosed in Patent Document 1.

In this vehicle front grille, a grille body corresponding to a skeleton of the front grille is arranged in front of a millimeter-wave radar device, and a millimeter-wave transmitting part and a part other than the millimeter-wave transmitting part of the grille body are integrally formed with no unevenness such as a parting line at a boundary therebetween so as not to damage unity in terms of appearance. With a heating element including a heater wire laid in a meandering pattern and covered by a pair of sheets, a front sheet of the heating element is adhesively attached in a vacuum state to a rear surface of the millimeter-wave transmitting part, thereby laying the heater wire in the millimeter-wave transmitting part.

PRIOR ART DOCUMENTS

PATENT DOCUMENTS

Patent Document 1: Japanese Patent Publication No. 7081414

SUMMARY OF THE INVENTION

PROBLEM TO BE SOLVED BY THE INVENTION

The vehicle front grille of Patent Document 1 has a configuration where the front sheet of the heating element is adhesively attached to the rear surface of the millimeter-wave transmitting part of the grille body, so that the heating element as a different member is adhesively attached behind the millimeter-wave transmitting part of the grille body in such a manner that the heating element wholly projects from the grille body locally. This results in a formation making the heating element as a different member susceptible to breakage and failure. This causes a demand for a radome having a configuration that prevents a snow-melting part from wholly projecting from a radome body locally that may be a vehicle part, for example.

The present invention is suggested in view of the foregoing problem, and is intended to provide a radome capable of preventing breakage and failure of a snow-melting part by eliminating a snow-melting part wholly projecting from a radome body locally.

SOLUTION TO PROBLEM

A radome according to the present invention comprises: a radome body formed of an electromagnetic-wave transmitting first resin base material; a snow-melting base formed of an electromagnetic-wave transmitting second resin base material having a refractive index mutually matching the refractive index of the first resin base material; and a heater unit secured to an electromagnetic-wave transmitting region of the snow-melting base. A recess part recessed in an electromagnetic-wave transmitting direction is formed in a local region of the radome body covering the electromagnetic-wave transmitting region. The snow-melting base is fitted in the recess part in such a manner as to bury the heater unit internally.

By doing this, the snow-melting base as a different member from the radome body is fitted in the recess part in such a manner as to bury the heater unit internally, making it possible to eliminate a snow-melting part wholly projecting from the radome body locally. This can prevent breakage and failure of a snow-melting part composed of the snow-melting base and the heater unit. Furthermore, as the heater unit can be laid at the snow-melting base having a small size conforming to the recess part in the local region, it is possible to encourage increase in a degree of freedom in a manufacturing facility for installation of the heater unit such as laying of a heater wire, improvement in handling of the snow-melting part, and improvement in efficiency in a manufacturing step. Moreover, as the heater unit and an electrically connected part of the heater unit are buried internally, it is possible to ensure water resistance, weather resistance, corrosion resistance, and damage resistance at the heater unit and the connected part of the heater unit. Furthermore, if the snow-melting base is used as a common part, many different types of radomes each having a snow-melting function can be provided at low cost only by changing the design of the radome body.

In the radome according to the present invention, a surface of the radome body on a forming side of the recess part and a principal area of an outer surface of the snow-melting base are substantially flush with each other.

By doing this, making the surface of the radome body and the principal area of the outer surface of the snow-melting base as a different member substantially flush with each other minimizes a situation such as snagging of the different member on the snow-melting base, making it possible to prevent breakage and failure of the snow-melting part more reliably.

In the radome according to the present invention, a surface of the radome body on a non-forming side of the recess part is arranged on a side to be visually recognized from outside, and a surface of the radome body on a forming side of the recess part is arranged on the side of a radar device.

By doing this, it becomes possible to prevent a boundary between the radome body and the snow-melting base as a different member fitted in the recess part of the radome body from being recognized visually from outside. Thus, favorable visibility of the radome body can be ensured when the radome body is viewed from outside.

In the radome according to the present invention, the heater unit is composed of a heater wire laid in the electromagnetic-wave transmitting region of the snow-melting base, and the heater wire is directly secured to the radome body.

By doing this, as the heater wire is secured directly to the radome body, it becomes unnecessary to provide a different member such as a resin sheet between the radome body and the heater wire. This can increase efficiency in heat conduction to the surface of the radome body arranged externally on the non-forming side of the recess part, making it possible to reliably melt snow or ice adhering to an external surface of the radome.

In the radome according to the present invention, a power supply cable electrically connected to the heater unit is pulled out toward the radar device while the power supply cable is separated from a side surface of the snow-melting base, and the radome body as an injection-molded material is secured to an outer periphery of the power supply cable.

By doing this, it becomes possible to determine a position of pulling out the power supply cable with an increased degree of freedom. Furthermore, securing the radome body as the injection-molded material to the outer periphery of the power supply cable allows the power supply cable to be located at and fixed to an intended pulling-out position.

In the radome according to the present invention, a power supply cable electrically connected to the heater unit is pulled out toward the radar device while the power supply cable is secured to a side surface of the snow-melting base, and the radome body as an injection-molded material is secured to the power supply cable and to the side surface of the snow-melting base to which the power supply cable is secured.

By doing this, it is possible for the power supply cable to be located at and fixed to an intended pulling-out position easily in a case such as formation of the radome body by injection molding with respect to the snow-melting base.

In the radome according to the present invention, a conductive connection plate electrically connected to a power supply cable projects from a back surface of the snow-melting base toward the radar device while the conductive connection plate is electrically connected to the heater unit.

By doing this, it is possible to connect the power supply cable by an appropriate method to the conductive connection plate projecting from the back surface of the snow-melting base toward the radar device. This makes it possible to increase a degree of freedom in a way of forming electrical connection between the heater wire and the power supply cable.

In the radome according to the present invention, the snow-melting base is provided with a latching hole penetrating the snow-melting base in an inward-outward direction, and the latching hole is filled with the radome body as an injection-molded material to secure the radome body and the snow-melting base to each other.

By doing this, it becomes possible for the snow-melting base to be secured with considerably higher strength to the radome body, making it possible to improve the strength and durability of the radome.

In the radome according to the present invention, at least a partial side surface of the snow-melting base is configured as a slanting surface, and the radome body as an injection-molded material is secured to the slanting surface to provide securing between the radome body and the snow-melting base.

By doing this, it becomes possible to increase an area of securing to the radome body as an injection-molded material using the slanting surface of the snow-melting base, thereby allowing the snow-melting base to be secured with still higher strength to the radome body. Moreover, the slanting surface of the snow-melting base provides improved resin flowability during injection molding, thereby allowing the snow-melting base and the radar body to be secured to each other more reliably without a clearance therebetween.

In the radome according to the present invention, a depression and a projection are formed at at least a partial side surface of the snow-melting base, and the radome body and the snow-melting base are secured to each other in such a manner as to fit a depression and a projection at the radome body as an injection-molded material to the depression and the projection at the side surface of the snow-melting base.

By doing this, the radome body and the snow-melting base are secured to each other with the depression and the projection at the radome body as the injection-molded material and the depression and the projection at the side surface of the snow-melting base fitted to each other. This provides anchor effect to allow the snow-melting base to be secured with still higher strength to the radome body.

In the radome according to the present invention, the recess part is provided as a cutout in a peripheral edge of the radome body, and a power supply cable electrically connected to the heater wire is pulled out to a lateral side of the radome body.

By doing this, it becomes possible to supply power reliably to the heater wire without damaging visibility of the radome both in a case where the surface of the radome body on the forming side of the recess part and the snow-melting base are pointed to the outside of a vehicle or the like and in a case where the surface of the radome body on the forming side of the recess part and the snow-melting base are pointed to the inside of the vehicle or the like.

In the radome according to the present invention, the heater unit is composed of a heater wire laid in and secured to the electromagnetic-wave transmitting region of the snow-melting base, and the snow-melting base is composed of a transparent resin.

By doing this, it becomes possible to determine the presence or absence of disturbance of a laid state of the heater wire visually through the transparent resin during shipping inspection of the radome, thereby achieving improved convenience in a step of manufacturing the radome.

EFFECTS OF THE INVENTION

In the radome according to the present invention, it is possible to prevent breakage and failure of the snow-melting part by eliminating a snow-melting part wholly projecting from the radome body locally.

BRIEF DESCRIPTION OF DRAWINGS

Fig. 1(a) is a front view of a radome according to a first embodiment of the present invention, and Fig. 1(b) is a back view of this radome.

Fig. 2(a) is an enlarged sectional view along A-A in Fig. 1(b), and Fig. 2(b) is an explanatory view showing the radome according to the first embodiment and a vehicle-mounted radar device.

Fig. 3 is an enlarged sectional view along B-B in Fig. 1(a).

Fig. 4 is an enlarged sectional view of a snow-melting base and its vicinity shown in Fig. 3.

Fig. 5 is an enlarged back view of the snow-melting base and its vicinity of the radome according to the first embodiment.

Fig. 6 is a back view of a radome according to a second embodiment of the present invention.

Fig. 7 is an enlarged sectional view corresponding to Fig. 4 and showing the radome according to the second embodiment.

Fig. 8 is an enlarged back view of a snow-melting base and its vicinity of the radome according to the second embodiment.

Fig. 9(a) is a front view of a radome according to a third embodiment of the present invention, and Fig. 9(b) is a back view of this radome.

Fig. 10 is an enlarged cross-sectional view of a snow-melting base and its vicinity of the radome according to the third embodiment.

Fig. 11 is an enlarged front view of the snow-melting base and its vicinity of the radome according to the third embodiment.

Fig. 12 is an enlarged back view of the snow-melting base and its vicinity of the radome according to the third embodiment.

Fig. 13(a) is a front view of a radome according to a fourth embodiment of the present invention, and Fig. 13(b) is a back view of this radome.

Fig. 14 is an enlarged sectional view along C-C in Fig. 13(a).

Fig. 15 is an enlarged sectional view along D-D in Fig. 13(a).

Fig. 16 is an enlarged back view of a snow-melting base and its vicinity of the radome according to the fourth embodiment.

Fig. 17 is an enlarged longitudinal sectional view of a radome according to a modification of the fourth embodiment.

Fig. 18(a) is a front view of a radome according to a fifth embodiment of the present invention, and Fig. 18(b) is a back view of this radome.

Fig. 19 is an enlarged sectional view along E-E in Fig. 18(a).

Fig. 20 is an enlarged sectional view along F-F in Fig. 18(a).

Fig. 21 is an enlarged back view of a snow-melting base and its vicinity of the radome according to the fifth embodiment.

Fig. 22(a) is a front view of a radome according to a sixth embodiment of the present invention, and Fig. 22(b) is a back view of this radome.

Fig. 23 is an enlarged sectional view along G-G in Fig. 22(a).

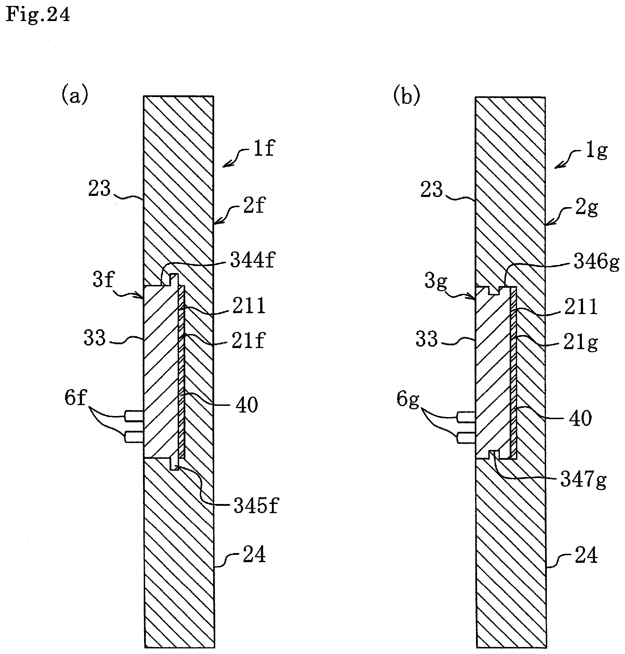

Fig. 24(a) is an enlarged longitudinal sectional view of a radome according to a seventh embodiment, and Fig. 24(b) is an enlarged longitudinal sectional view of a radome according to an eighth embodiment.

## DESCRIPTION OF EMBODIMENTS

[Radome According to First Embodiment]

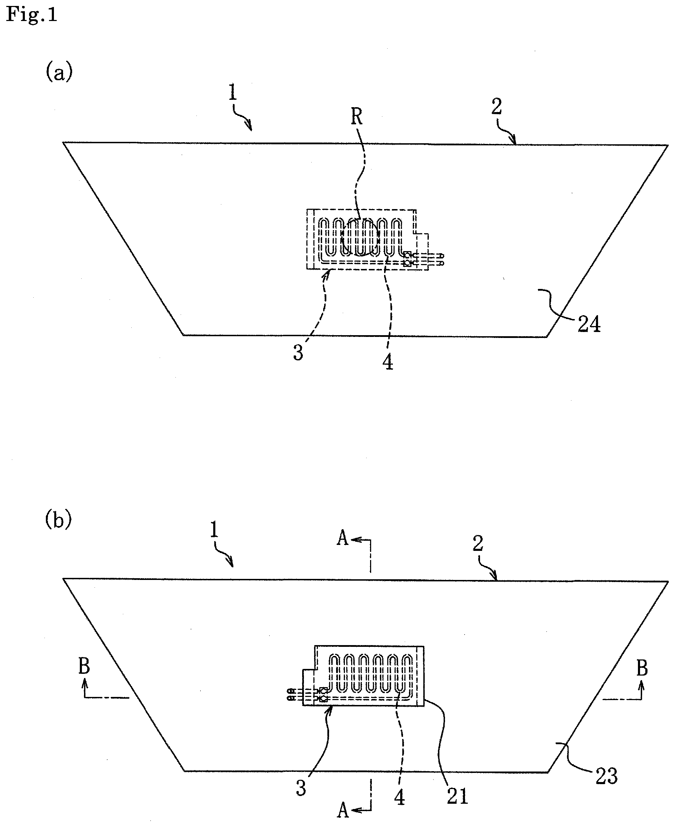

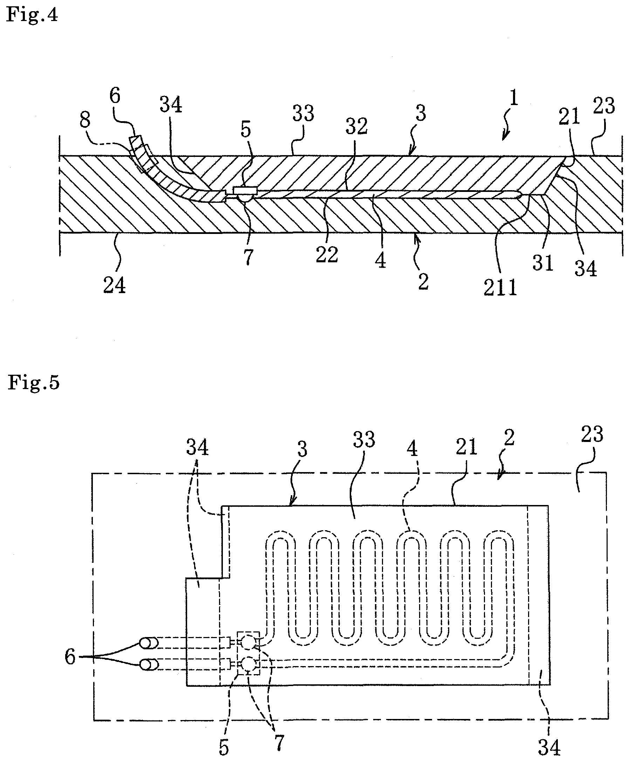

A radome 1 according to a first embodiment of the present invention is a radome for vehicle-mounted radar device to be used as a bumper cover mounted on a bumper of a vehicle, for example. As shown in Figs. 1 to 5, the radome 1 includes a radome body 2 formed of an electromagnetic-wave transmitting first resin base material, and a snow-melting base 3 formed of an electromagnetic-wave transmitting second resin base material having a refractive index mutually matching the refractive index of the first resin base material of the radome body 2.

Each of the first resin base material forming the radome body 2 and the second resin base material forming the snow-melting base 3 is an insulating and electromagnetic-wave transmitting synthetic resin. The first resin base material forming the radome body 2 and the second resin base material forming the snow-melting base 3 may be prepared using different types of synthetic resins or the same type of synthetic resin. From the viewpoint of improving the performance of transmitting electromagnetic waves, it is preferable that the first resin base material and the second resin base material be formed of materials having respective refractive indexes n defined on the basis of complex permittivities that match each other or substantially equal or approximate to each other. Favorably, a numerical range for the refractive indexes of the first resin base material and the second resin base material approximate to each other is such that a difference between the refractive indexes of the first resin base material and the second resin base material is within a range from 0 to 10%.

The refractive index n mentioned herein is a quantity defined as Formula 1 using a relative permittivity real part $\varepsilon'r$ and a relative permittivity imaginary part $\varepsilon''r$. From the viewpoint of transmitting property, it is preferable for a dielectric tangent (loss tangent) $\tan\delta$, defined as Formula 2 on the basis of a ratio between the imaginary part and the real part in an applied frequency, to have a magnitude of equal to or less than 0.1. It is further preferable for the relative permittivity real part to have a magnitude of equal to or less than 3. Setting the magnitudes of the dielectric tangent and the relative permittivity real part equal to or less than these respective numerical values makes it possible to obtain a reflective index required for the radome and to reduce internal loss reliably.

[Formula 1]

$$n = \sqrt{\frac{\varepsilon'_r + \sqrt{\varepsilon'^{\,2}_r + \varepsilon''^{\,2}_r}}{2}}$$

[Formula 2]

$$\tan\delta = \frac{\varepsilon''_r}{\varepsilon'_r}$$

Appropriate synthetic resins are available within the range of the purport of the present invention as the first resin base material forming the radome body 2 and the second resin base material forming the snow-melting base 3. The first resin base material or the second resin base material is prepared favorably by using one type of materials alone or a combination of two or more types of the materials including an acrylic resin such as polymethyl methacrylate (PMMA), polycarbonate (PC), acrylonitrile-butadiene-styrene copolymer (ABS), acrylonitrile-styrene-acrylate copolymer (ASA), acrylonitrile-ethylene propyl rubber-styrene copolymer (AES), polypropylene (PP), polyphenylene ether (PPE), and modified polyphenylene ether (m-PPE). The first resin base material or the second resin base material may contain an additive. A foam resin may be used as the second resin base material forming the snow-melting base 3. Furthermore, using a transparent resin as the second resin base material forming the snow-melting base 3 is preferable as this allows the presence or absence of disturbance of a laid state of a heater wire 4 to be determined visually through the transparent resin during shipping inspection of the radome 1, thereby achieving improved convenience in a step of manufacturing the radome.

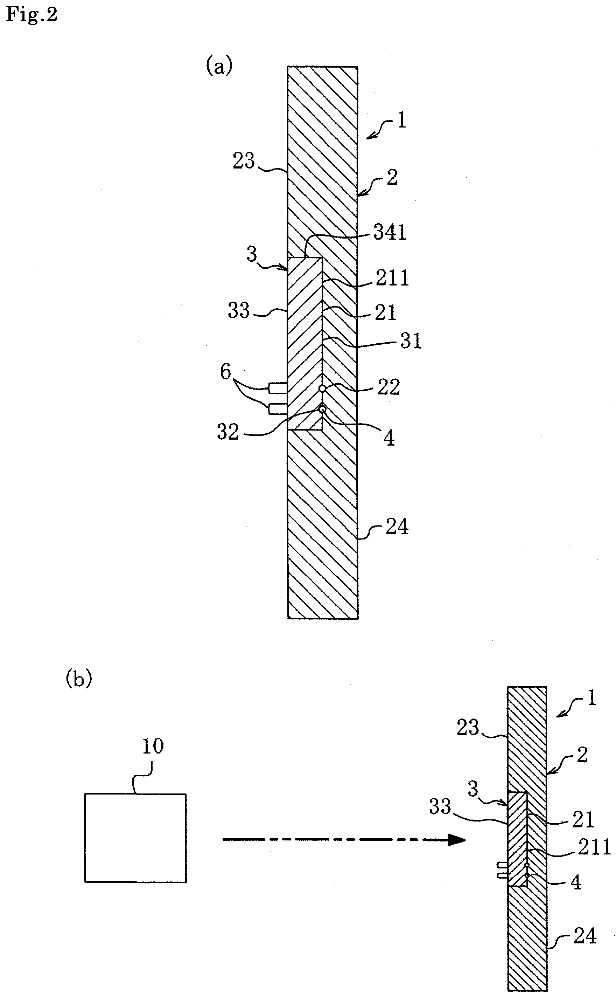

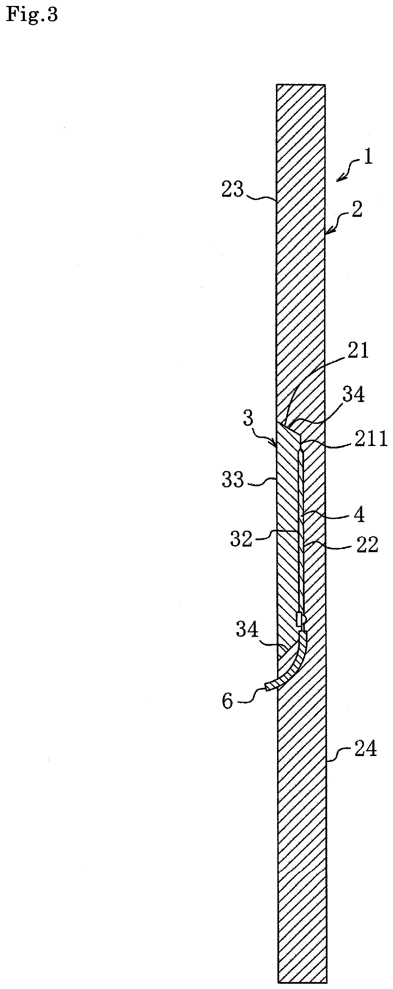

In a local region of the radome body 2 covering an electromagnetic-wave transmitting region R, a recess part 21 is formed in such a manner as to be recessed in an electromagnetic-wave transmitting direction in which an electromagnetic wave such as a millimeter wave is transmitted through the radome body 2 after being emitted in such a way as shown by alternate solid long and two short dashes lines with an arrow in Fig. 2(b) from a vehicle-mounted radar device 10 corresponding to a radar device of the present embodiment. In the example in Figs. 2 and 3, the recess part 21 is formed at a substantially central position of a surface 23 of the radome body 2 into a shape with a slanting side surface that becomes narrow from an opening side toward a bottom surface 211 of the recess part 21. The snow-melting base 3, which is formed in near conformity with the shape of the recess part 21, is fitted in the recess part 21 in such a manner as to be inserted into the recess part 21 with a closed bottom.

The heater wire 4 is laid at the snow-melting base 3 along one surface of the snow-melting base 3 in the electromagnetic-wave transmitting direction. The heater wire 4 is laid in the electromagnetic-wave transmitting region R of the snow-melting base 3 and is secured to the snow-melting base 3. While the heater wire 4 in the illustrated example is laid in a meandering pattern, a pattern for laying the heater wire 4 is determined appropriately within the range of the purport of the present invention.

By fitting the snow-melting base 3 into the recess part 21 of the radome body 2, the heater wire 4 is buried in such a manner as to be interposed between a heater wire laying surface 31 of the snow-melting base 3 and the bottom surface 211 of the recess part 21. The heater wire 4 is buried inside the radome 1 and sealing is provided around the heater wire 4.

In the present embodiment, a groove 32 is formed in the heater wire laying surface 31 of the snow-melting base 3 and a different groove 22 is formed in the bottom surface 211 of the recess part 21 in a state of facing the groove 31. The heater wire 4 is laid along the groove 32 and the different groove 22 in such a manner as to be fitted in the groove 32 and the groove 22, thereby securing the heater wire 4 directly to the bottom surface 211 of the recess part 21, in other words, to the radome body 2.

The configuration of securing the heater wire 4 to the snow-melting base 3 and burying the heater wire 4 inside the radome 1 is determined appropriately within the range of the purport of the present invention. In one configuration, for example, the heater wire 4 may be buried by adhesively attaching the heater wire 4 with an adhesive film to the heater wire laying surface 31 of the snow-melting base 3 without the groove 32, and fitting the snow-melting base 3 into the recess part 21 in such a manner as to insert the heater wire 4 projecting from the heater wire laying surface 31 of the snow-melting base 3 into a groove like the different groove 22 formed in the bottom surface 211 of the recess part 21. From the viewpoint of improving convenience relating to laying of the heater wire 4 or handling of the snow-melting base 3, the size of the outer shape of the snow-melting base 3, in other words, the area of the heater wire laying surface 31 is preferably set equal to or greater than the area of the electromagnetic-wave transmitting region R and equal to or less than five times the area of the electromagnetic-wave transmitting region R, more preferably, equal to or less than three times the area of the electromagnetic-wave transmitting region R.

An appropriate conductive material is available within the range of the purport of the present invention as a conductive material forming the heater wire 4. Examples of a favorable material include copper, silver, silver-plated copper, a copper-silver alloy, a copper-nickel alloy, a nickel-chrome alloy, an iron-chrome alloy, a transparent conductive film such as an ITO film, and carbon fiber. The form of the heater wire 4 of the present invention is not limited and the heater wire 4 to be used may be a wire rod, conductive ink, or a conductive filler, for example.

The heater wire laying surface 31 of the snow-melting base 3 is provided with a metallic conductive connection plate 5 secured through adhesion, for example. One connection end and the other connection end of the heater wire 4 are both introduced in such a manner as to be placed on the conductive connection plate 5. One connection end and the other connection end of a power supply cable 6 such as a wire harness are both introduced in such a manner as to be placed on the conductive connection plate 5. Electrical and mechanical connections are established between the one connection end of the heater wire 4 and the one connection end of the power supply cable 6 and between the other connection end of the heater wire 4 and the other connection end of the power supply cable 6 through a conductive junction 7 composed of solder, a brazing material, a conductive adhesive agent (ECA), or anisotropic conductive paste (ACP), for example.

The power supply cable 6 electrically connected to the heater wire 4 is pulled out toward the vehicle-mounted radar device 10 while the power supply cable 6 is separated from a side surface 34 of the snow-melting base 3 that is slanting in such a manner as to expand toward the vehicle-mounted radar device 10. In the present embodiment, with respect to the heater wire 4, the conductive connection plate 5, the power supply cable 6 extending in a curved pattern, and the snow-melting base 3 already installed with the conductive junction 7, the radome body 2 is formed by injection molding in such a manner as to cover the heater wire laying surface 31 of the snow-melting base 3, and the side surfaces 34, 34 as slanting surfaces facing each other and side surfaces 341, 341 as vertical surfaces standing vertically from the heater wire laying surface 31 and facing each other that form a peripheral side surface of the snow-melting base 3. The radome body 2 as an injection-molded material is secured to an outer periphery of the power supply cable 6. From the viewpoint of improving sealing performance, a place where the power supply cable 6 is pulled out from the radome body 2 as the injection-molded material favorably has a configuration where a rubber stopper 8 like a short cylinder made of silicon rubber or the like is fitted in the outer periphery of the power supply cable 6 to be buried in such a manner that at least a part of the rubber stopper 8 digs into the radome body 2.

Furthermore, in the present embodiment, the surface 23 of the radome body 2 on a forming side of the recess part 21 and a principal area of an outer surface 33 of the snow-melting base 3 are substantially flush with each other. In the illustrated example, the surface 23 of the radome body 2 on the forming side of the recess part 21 and the outer surface 33 of the snow-melting base 3 as a whole are substantially flush with each other. A surface 24 of the radome body 2 on a non-forming side of the recess part 21 is arranged on a side to be visually recognized from outside, in other words, on an external side of a vehicle body of an automobile, and the surface 23 of the radome body 2 on the forming side of the recess part 21 is arranged on the side of the vehicle-mounted radar device 10 (see Fig. 2(b)).

In the radome 1 according to the first embodiment, the snow-melting base 3 as a different member from the radome body 2 is fitted in the recess part 21 in such a manner as to bury the heater wire 4 internally, making it possible to eliminate a snow-melting part wholly projecting from the radome body 2 locally. This can prevent breakage and failure of a snow-melting part composed of the snow-melting base 3 and the heater wire 4. Furthermore, as the heater wire 4 can be laid at the snow-melting base 3 having a small size conforming to the recess part 21 in the local region, it is possible to encourage increase in a degree of freedom in a manufacturing facility where the heater wire 4 is laid, improvement in handling of the snow-melting part, and improvement in efficiency in a manufacturing step. Moreover, as the laid heater wire 4 and the electrically connected part of the heater wire 4 are buried internally, it is possible to ensure water resistance, weather resistance, corrosion resistance, and damage resistance at the laid heater wire 4 and the connected part of the heater wire 4. Furthermore, if the snow-melting base 3 is used as a common part, many different types of radomes 1 each having a snow-melting function can be provided at low cost only by changing the design of the radome body 2.

Making the surface 23 of the radome body 2 and a principal area of the outer surface 33 of the snow-melting base 3 as a different member substantially flush with each other minimizes a situation such as snagging of the different member on the snow-melting base 3, making it possible to prevent breakage and failure of the snow-melting part more reliably.

By arranging the surface 24 of the radome body 2 on the non-forming side of the recess part 21 on a side to be visually recognized from outside and arranging the surface 23 on the forming side of the recess part 21 on the side of the vehicle-mounted radar device 10, it becomes possible to prevent a boundary between the radome body 2 and the snow-melting base 3 as a different member fitted in the recess part 21 from being recognized visually from outside. Thus, favorable visibility of the radome body 2 can be ensured when the radome body 2 is viewed from outside.

If the heater wire 4 is secured directly to the radome body 2, it is unnecessary to provide a different member such as a resin sheet or an adhesive film between the radome body 2 and the heater wire 4. This can increase efficiency in heat conduction to the surface 24 of the radome body 2 arranged externally on the non-forming side of the recess part 21, making it possible to reliably melt snow or ice adhering to the surface 24 corresponding to an external surface of the radome 1.

With the configuration where the power supply cable 6 electrically connected to the heater wire 4 is pulled out toward the vehicle-mounted radar device 10 while the power supply cable 6 is separated from the side surface 34 of the snow-melting base 3, it is possible to determine a position of pulling out the power supply cable 6 with an increased degree of freedom. Furthermore, securing the radome body 2 as the injection-molded material to the outer periphery of the power supply cable 6 allows the power supply cable 6 to be located at and fixed to an intended pulling-out position.

If the side surface 34 of the snow-melting base 3 is configured as a slanting surface and the radome body 2 is configured as the injection-molded material, it is possible to increase an area of securing to the radome body 2 as the injection-molded material, thereby allowing the snow-melting base 3 to be secured with higher strength to the radome body 2. Moreover, the slanting surface of the side surface 34 of the snow-melting base 3 provides improved resin flowability during the injection molding, thereby allowing the snow-melting base 3 and the radar body 2 to be secured to each other more reliably without a clearance therebetween.

[Radome According to Second Embodiment]

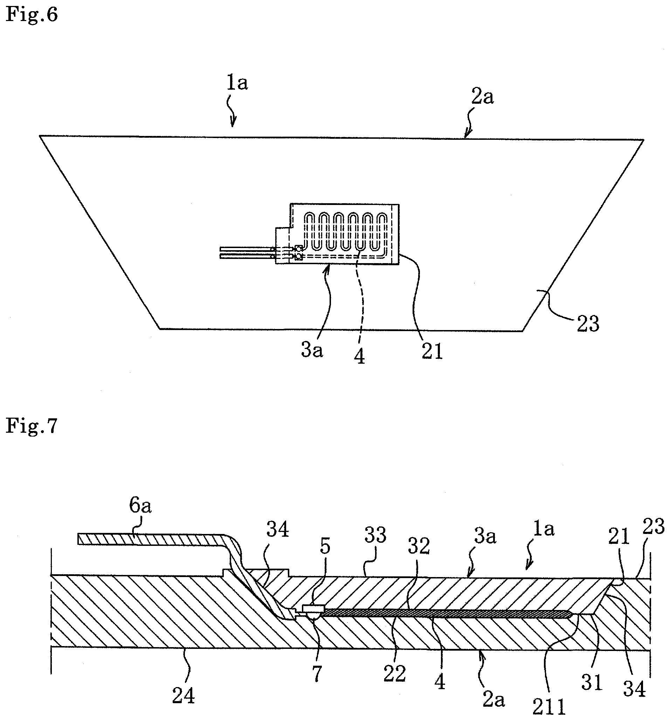

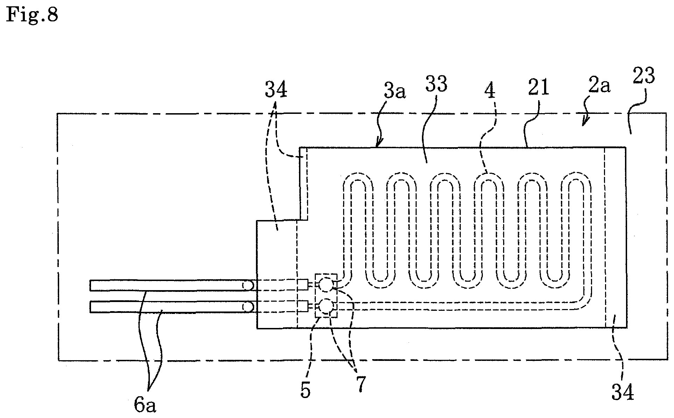

As shown in Figs. 6 to 8, a radome 1a according to a second embodiment of the present invention includes a radome body 2a formed of an electromagnetic-wave transmitting first resin base material, and a snow-melting base 3a formed of an electromagnetic-wave transmitting second resin base material having a refractive index mutually matching the refractive index of the first resin base material of the radome body 2a. Configurations or modifications not particularly mentioned in the second embodiment are similar to the configurations or modifications of the radome 1 according to the first embodiment.

In the radome 1a according to the second embodiment, a power supply cable 6a electrically connected to the heater wire 4 is pulled out toward the vehicle-mounted radar device 10 while the power supply cable 6a is secured to the side surface 34 of the snow-melting base 3a that is slanting in such a manner as to expand toward the vehicle-mounted radar device 10.

With respect to the heater wire 4, the conductive connection plate 5, the power supply cable 6a, and the snow-melting base 3a already installed with the conductive junction 7, the radome body 2a is formed by injection molding in such a manner as to cover the heater wire laying surface 31 of the snow-melting base 3a, and each of the side surfaces 34 and 341 that form a peripheral side surface of the snow-melting base 3a. The radome body 2a as an injection-molded material is secured to the power supply cable 6a and to the side surface 34 of the snow-melting base 3a to which the power supply cable 6a is secured. From the viewpoint of improving sealing performance, a place where the power supply cable 6a is pulled out from the radome body 2a as the injection-molded material also favorably has a configuration where the rubber stopper 8 like a short cylinder made of silicon rubber or the like is fitted in an outer periphery of the power supply cable 6a to be buried in such a manner that at least a part of the rubber stopper 8 digs into the radome body 2.

In the second embodiment, the surface 23 of the radome body 2a on a forming side of the recess part 21 and a principal area of the outer surface 33 of the snow-melting base 3a are substantially flush with each other. In the illustrated example, the surface 23 of the radome body 2a on the forming side of the recess part 21 and the outer surface 33 of the snow-melting base 3a are substantially flush with each other except the place where the power supply cable 6a is pulled out.

In the radome 1a according to the second embodiment, securing the power supply cable 6a to the side surface 34 of the snow-melting base 3a allows the power supply cable 6a to be located at and fixed to an intended pulling-out position easily in a case such as formation of the radome body 2a by injection molding with respect to the snow-melting base 3a. It is also possible to fulfill comparable effects using configurations corresponding to those of the first embodiment.

[Radome According to Third Embodiment]

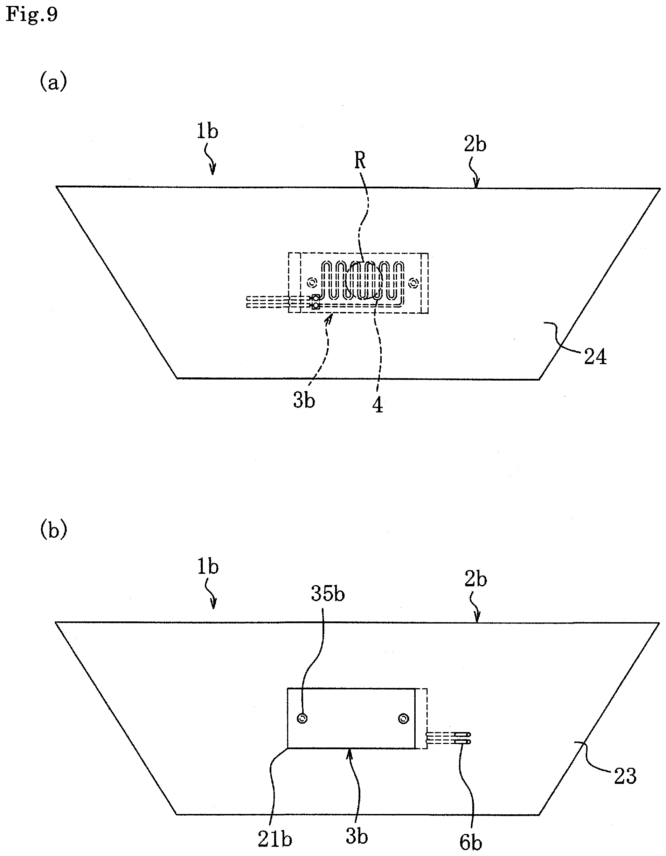

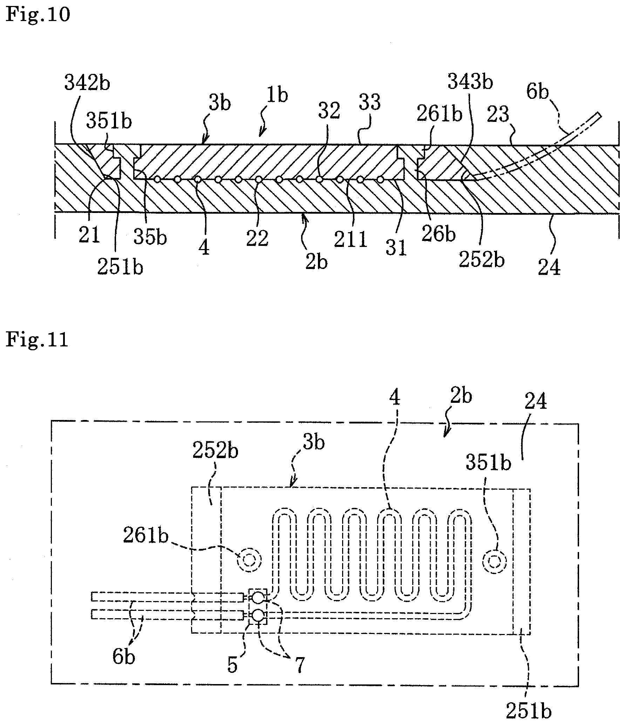

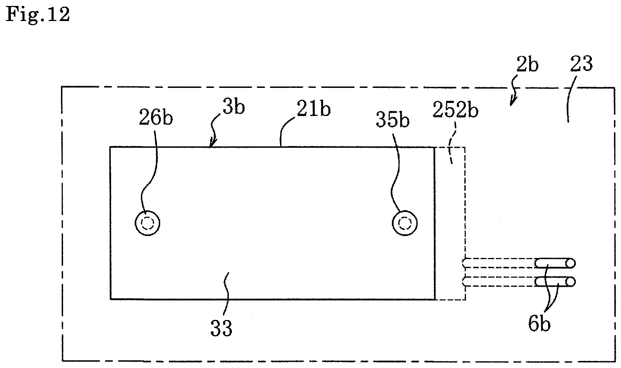

As shown in Figs. 9 to 12, a radome 1b according to a third embodiment of the present invention includes a radome body 2b formed of an electromagnetic-wave transmitting first resin base material, and a snow-melting base 3b formed of an electromagnetic-wave transmitting second resin base material having a refractive index mutually matching the refractive index of the first resin base material of the radome body 2b. Configurations or modifications not particularly mentioned in the third embodiment are similar to the configurations or modifications of the radome 1 according to the first embodiment.

The radome body 2b according to the third embodiment includes a recess part 21b having a side surface 251b slanting in such a manner as to become narrow and a side surface 252b slanting in such a manner as to expand, both from an opening side toward the bottom surface 211 of the recess part 21b. The snow-melting base 3b has a side surface 342b slanting in such a manner as to become narrow and a side surface 343b slanting in such a manner as to expand, both toward the bottom surface 211 of the recess part 21b. The snow-melting base 3b is fitted in the recess part 21b by being inserted into the recess part 21b with a closed bottom. The side surface 251b and the side surface 342b are secured to each other while tightly contacting each other, and the side surface 252b and the side surface 343b are secured to each other while tightly contacting each other. In one configuration, only a partial side surface of the snow-melting base 3b may be configured as the side surface 342b as a slanting surface or as the side surface 343b as a slanting surface. Alternatively, an entire peripheral side surface of the snow-melting base 3b may be configured as the side surface 342b as a slanting surface or as the side surface 343b as a slanting surface, or as a combination of the side surface 342b as a slanting surface and the side surface 343b as a slanting surface.

A power supply cable 6b electrically connected to the heater wire 4 is pulled out toward the vehicle-mounted radar device 10 while the power supply cable 6b is separated from the side surface 342b or the side surface 343b of the snow-melting base 3. With respect to the heater wire 4, the conductive connection plate 5, the power supply cable 6b extending in a curved pattern, and the snow-melting base 3b already installed with the conductive junction 7, the radome body 2 is formed by injection molding in such a manner as to cover the heater wire laying surface 31 of the snow-melting base 3b, and the side surfaces 342b, 343b and others forming the peripheral side surface of the snow-melting base 3b (in the illustrated example, the side surface 342b, the side surface 343b, and the two side surfaces 341, 341 facing each other). The radome body 2b as an injection-molded material is secured to an outer periphery of the power supply cable 6b.

The snow-melting base 3b is provided with a latching hole 35b penetrating the snow-melting base 3b in an inward-outward direction of the radome 1b. The latching hole 35b in the illustrated example has a mushroom-like shape with a large-diameter portion 351b formed near the outer surface 33. The latching hole 35b is filled with a latching part 26b of the radome body 2b as the injection-molded material, and the latching part 26b of the injection-molded material is secured to a peripheral wall of the latching hole 35b. A large-diameter portion 261b of the latching part 26b having a mushroom-like shape is latched in such a manner as to be hooked on the large-diameter portion 351b of the latching hole 35b, thereby securing the radome body 2b and the snow-melting base 3b to each other.

In the radome 1b according to the third embodiment, the latching hole 35b of the snow-melting base 3b is filled with the latching part 26b of the radome body 2b as the injection-molded material to secure the radome body 2b and the snow-melting base 3b to each other. This allows the snow-melting base 3b to be secured with considerably higher strength to the radome body 2b, making it possible to improve the strength and durability of the radome 1b.

By configuring the side surfaces 342b and 343b of the snow-melting base 3b as slanting surfaces and configuring the radome body 2b as the injection-molded material, it becomes possible to increase an area of securing to the radome body 2b as the injection-molded material, thereby allowing the snow-melting base 3b to be secured with still higher strength to the radome body 2b. Moreover, the slanting surfaces of the side surfaces 342b and 343b of the snow-melting base 3b provide improved resin flowability during the injection molding, thereby allowing the snow-melting base 3b and the radar body 2b to be secured to each other more reliably without a clearance therebetween. It is also possible to fulfill comparable effects using configurations corresponding to those of the first embodiment.

[Radome According to Fourth Embodiment]

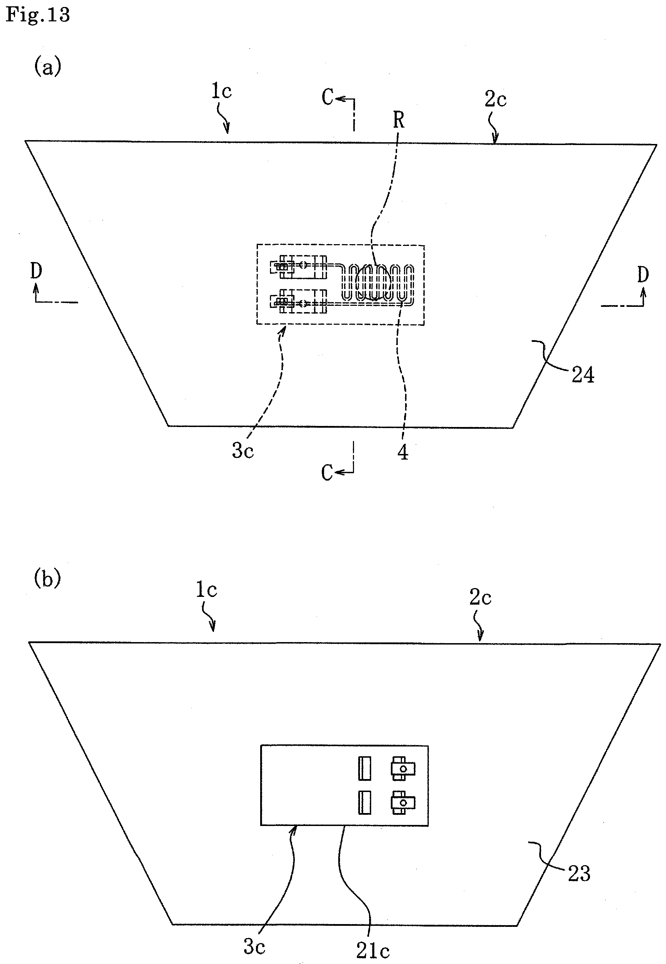

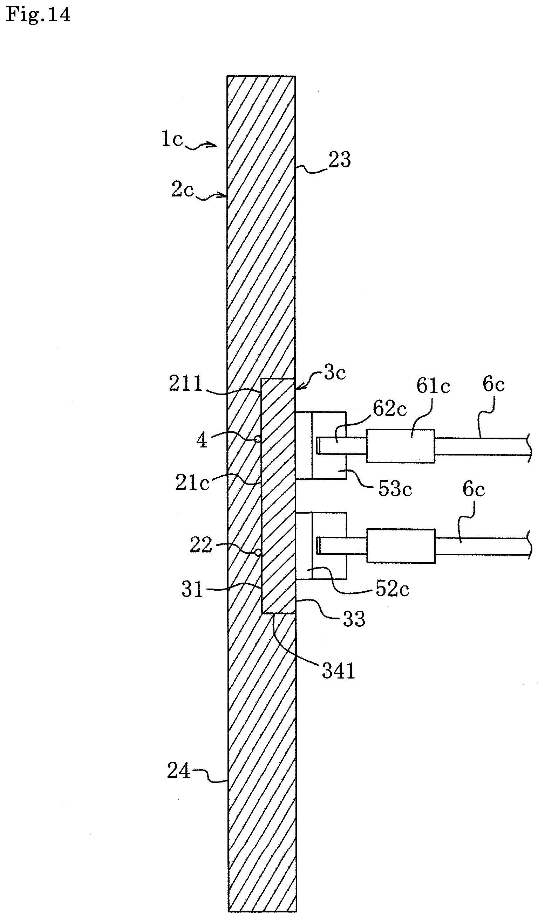

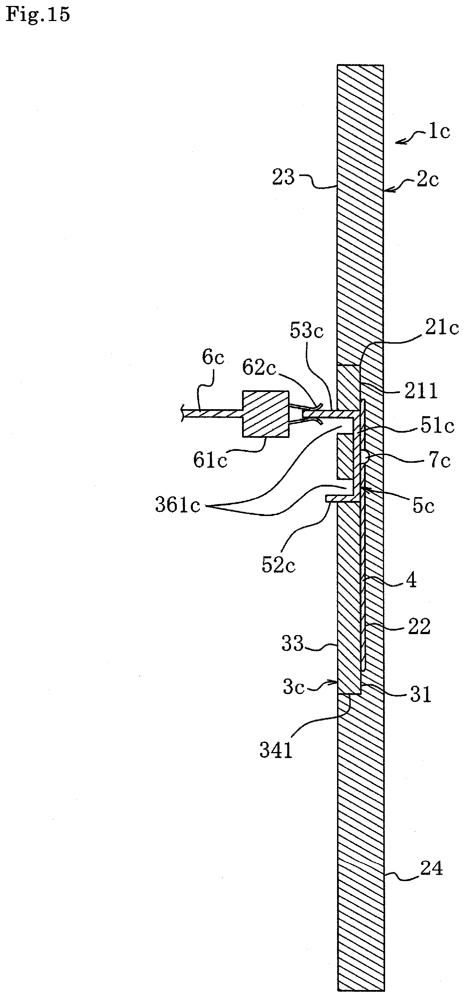

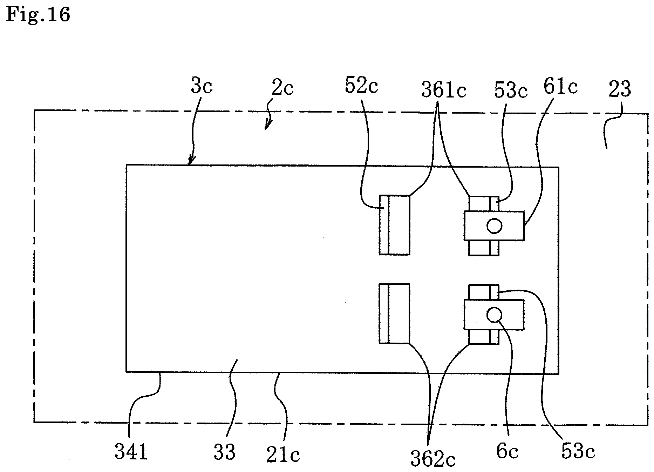

As shown in Figs. 13 to 16, a radome 1c according to a fourth embodiment of the present invention includes a radome body 2c formed of an electromagnetic-wave transmitting first resin base material, and a snow-melting base 3c formed of an electromagnetic-wave transmitting second resin base material having a refractive index mutually matching the refractive index of the first resin base material of the radome body 2c. Configurations or modifications not particularly mentioned in the fourth embodiment are similar to the configurations or modifications of the radome 1 according to the first embodiment.

A recess part 21c provided in a local region of the radome body 2c covering the electromagnetic-wave transmitting region R is formed into a substantially square-cornered U shape in a sectional view at a substantially central position of the surface 23 of the radome body 2c. The snow-melting base 3c, which is formed in near conformity with the shape of the recess part 21c, is fitted in the recess part 21c. The snow-melting base 3c is provided with engagement holes 361c, 361c formed at two separate positions and penetrating the snow-melting base 3c in an inward-outward direction such as an inward-outward direction of a vehicle, and engagement holes 362c, 362c formed at two separate positions and penetrating the snow-melting base 3c in the inward-outward direction such as the inward-outward direction of the vehicle. The heater wire 4 is laid by being fitted only in the groove 22 of the radome body 2c.

Metallic conductive connection plates 5c each having a substantially square-cornered U shape in a sectional view are used in a pair for forming electrical connection of the heater wire 4. The conductive connection plate 5c has a short-side wall 52c standing substantially vertically from one edge of a substrate 51c in a right-left direction, and a long-side wall 53c standing substantially vertically from the other edge of the substrate 51c and longer than the short-side wall 52c. The substrate 51c is buried in the radome 1c more internally than the snow-melting base 3c. The short-side wall 51c and the long-side wall 52c of one of the conductive connection plates 5c are provided in such a manner as to project to the outside by being passed through the respective engagement holes 361c, 361c. The short-side wall 52c and the long-side wall 53c of the other conductive connection plate 5c are provided in such a manner as to project to the outside by being passed through the respective engagement holes 362c, 362c. While the position of the long-side wall 53c of one of the conductive connection plates 5c and that of the long-side wall 53c of the other conductive connection plate 5c are the same in the right-left direction in the illustrated example, these positions may differ from each other in the right-left direction.

One connection end of the heater wire 4 is introduced between the substrate 51c of one of the conductive connection plates 5c and the radome body 2c. One of the conductive connection plates 5c and the one connection end of the heater wire 4 are electrically and mechanically connected to each other through a conductive junction 7c composed of solder, a brazing material, a conductive adhesive agent (ECA), or anisotropic conductive paste (ACP), for example. The other connection end of the heater wire 4 is introduced between the substrate 51c of the other conductive connection plate 5c and the radome body 2c. The other conductive connection plate 5c and the other connection end of the heater wire 4 are electrically and mechanically connected to each other through the conductive junction 7c.

While being electrically connected to the heater wire 4, one of the conductive connection plates 5c and the other conductive connection plate 5c project from the outer surface 33 corresponding to a back surface of the snow-melting base 3c toward the vehicle-mounted radar device 10. In this example, the long-side wall 53c and the short-side wall 52c of one of the conductive connection plates 5c and the long-side wall 53c and the short-side wall 52c of the other conductive connection plate 5c project from the back surface of the snow-melting base 3c toward the vehicle-mounted radar device 10. The surface 23 of the radome body 2c on a forming side of the recess part 21c and a principal area of the outer surface 33 of the snow-melting base 3c are substantially flush with each other. The surface 23 of the radome body 2c and the outer surface 33 of the snow-melting base 3c are substantially flush with each other except places where the short-side wall 52c and the long-side wall 53c of the conductive connection plate 5c project.

In the present embodiment, with respect to the heater wire 4, the conductive connection plate 5c, and the snow-melting base 3c already installed with the conductive junction 7c, the radome body 2c is formed by injection molding in such a manner as to cover the heater wire laying surface 31 of the snow-melting base 3c and each side surface 341 forming a peripheral side surface of the snow-melting base 3c. Furthermore, a power supply cable 6c is used that has a tip with a connector 61c and contact springs 62c, 62c in a pair. The long-side wall 53c of the conductive connection plate 5c is interposed using the contact springs 62c, 62c in a pair to electrically connect the power supply cable 6c to the conductive connection plate 5c.

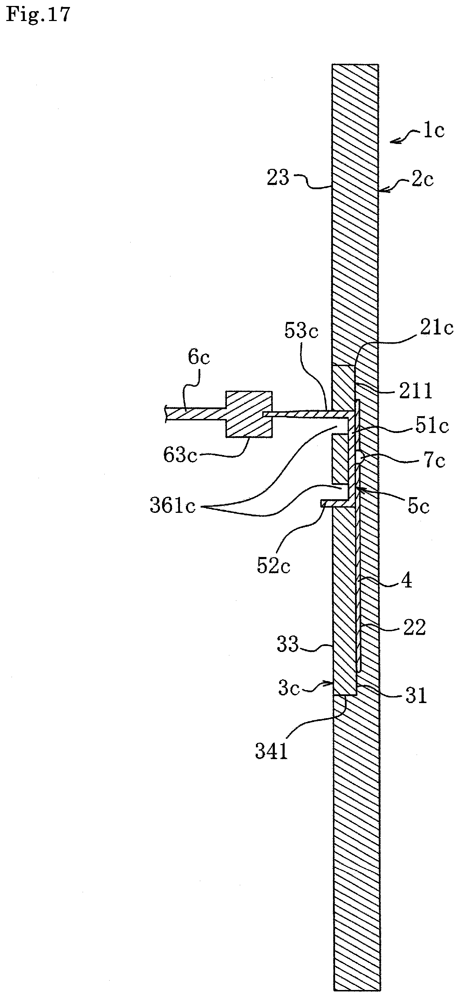

In a configuration according to a modification of the fourth embodiment, the power supply cable 6c and the conductive connection plate 5c may be electrically connected to each other by providing a female terminal to a connector 63c mounted on the tip of the power supply cable 6c, providing a tip of the long-side wall 53c with a male terminal having a shape corresponding to the female terminal, and inserting the female terminal into the male terminal (see Fig. 17).

In the radome 1c according to the fourth embodiment, it is possible to connect the power supply cable 6c by an appropriate method to the conductive connection plate 5c projecting from the outer surface 33 corresponding to the back surface of the snow-melting base 3c toward the vehicle-mounted radar device 10. This makes it possible to increase a degree of freedom in a way of forming electrical connection between the heater wire 4 and the power supply cable 6c. It is also possible to fulfill comparable effects using configurations corresponding to those of the first embodiment.

[Radome According to Fifth Embodiment]

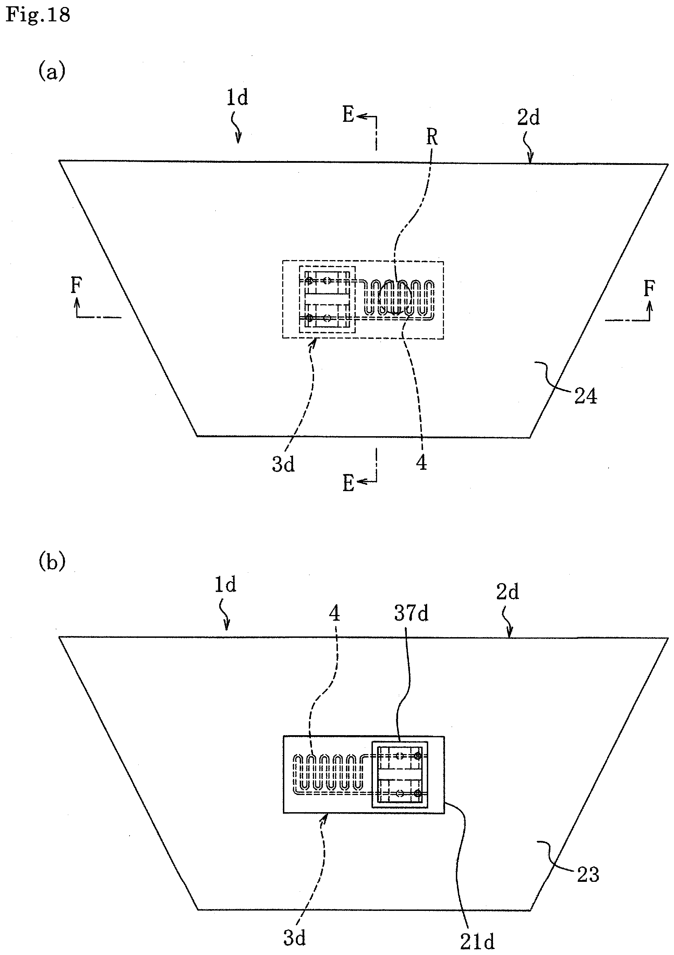

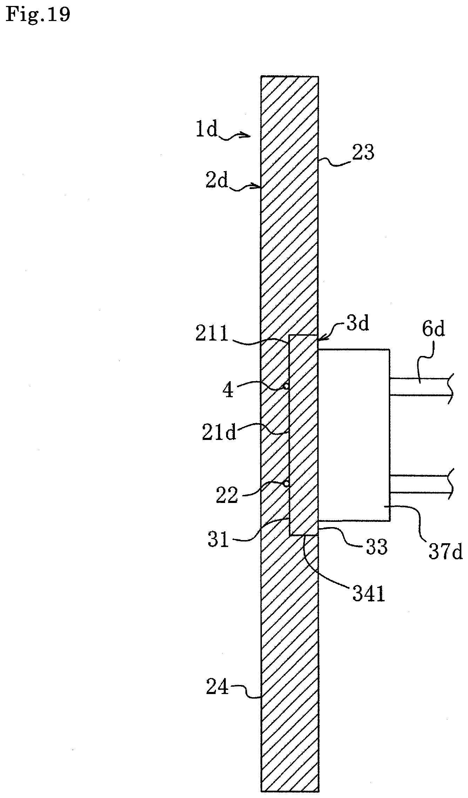

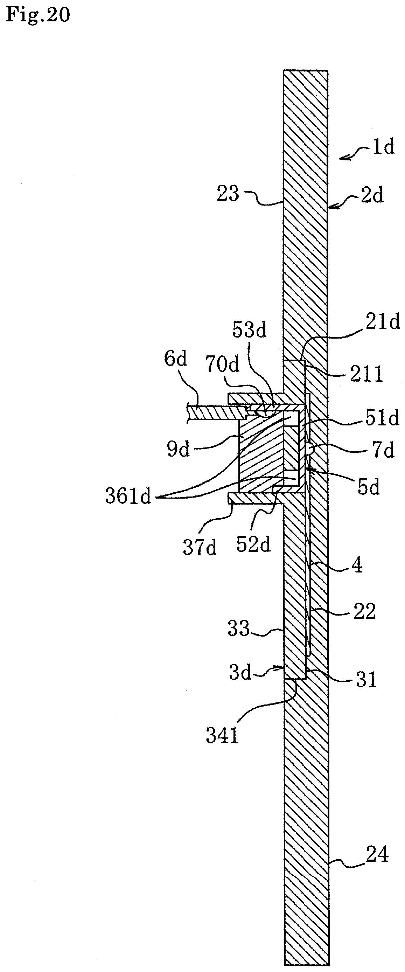

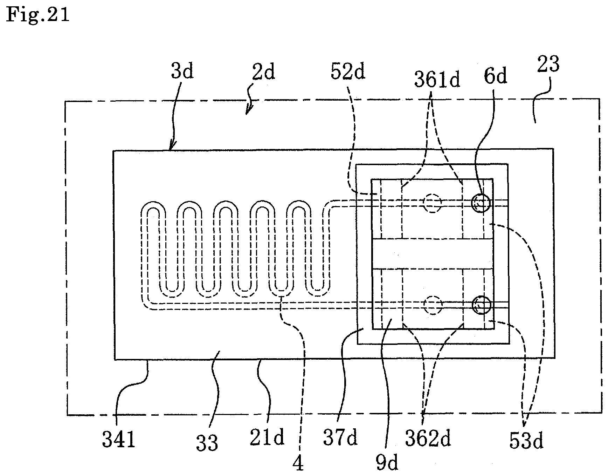

As shown in Figs. 18 to 21, a radome 1d according to a fifth embodiment of the present invention includes a radome body 2d formed of an electromagnetic-wave transmitting first resin base material, and a snow-melting base 3d formed of an electromagnetic-wave transmitting second resin base material having a refractive index mutually matching the refractive index of the first resin base material of the radome body 2d. Configurations or modifications not particularly mentioned in the fifth embodiment are similar to the configurations or modifications of the radome 1 or 1c according to the first or fourth embodiment.

A snow-melting base 3d, which is formed in near conformity with the shape of a recess part 21d of the radome body 2d, is fitted in the recess part 21d having a substantially square-cornered U shape in a sectional view. The snow-melting base 3d is provided with engagement holes 361d, 361d formed at two separate positions and the engagement holes 362d, 362d formed at two separate positions, both penetrating the snow-melting base 3d in an inward-outward direction such as an inward-outward direction of a vehicle.

Conductive connection plates 5d each having the same configuration as the conductive connection plate 5c are used in a pair for forming electrical connection of the heater wire 4. A substrate 51d of the conductive connection plate 5d is buried in the radome 1d more internally than the snow-melting base 3d. A short-side wall 52d and a long-side wall 53d of one of the conductive connection plates 5d are provided in such a manner as to project to the outside of the surface 23 of the radome body 2 on a recess part forming side by being passed through the respective engagement holes 361d, 361d. The short-side wall 52d and the long-side wall 53d of the other conductive connection plate 5d are provided in such a manner as to project to the outside of the surface 23 of the radome body 2 on the recess part forming side by being passed through the respective engagement holes 362d, 362d. While the position of the long-side wall 53d of one of the conductive connection plates 5d and that of the long-side wall 53d of the other conductive connection plate 5d are the same in the right-left direction in the illustrated example, these positions may differ from each other in the right-left direction.

One connection end of the heater wire 4 is introduced between the substrate 51d of one of the conductive connection plates 5d and the radome body 2d. One of the conductive connection plates 5d and the one connection end of the heater wire 4 are electrically and mechanically connected to each other through a conductive junction 7d. The other connection end of the heater wire 4 is introduced between the substrate 51d of the other conductive connection plate 5d and the radome body 2d. The other conductive connection plate 5d and the other connection end of the heater wire 4 are electrically and mechanically connected to each other through the conductive junction 7d.

While being electrically connected to the heater wire 4, one of the conductive connection plates 5d and the other conductive connection plate 5d project from the outer surface 33 corresponding to a back surface of the snow-melting base 3d toward the vehicle-mounted radar device 10. In this example, the long-side wall 53d and the short-side wall 52d of one of the conductive connection plates 5d and the long-side wall 53d and the short-side wall 52d of the other conductive connection plate 5d project from the outer surface 33 corresponding to the back surface of the snow-melting base 3d toward the vehicle-mounted radar device 10.

Furthermore, the snow-melting base 3d is provided with a rectangular frame 37d formed integrally with the snow-melting base 3d and projecting toward the vehicle-mounted radar device 10. Projecting portions of the long-side wall 53d and the short-side wall 52d of one of the conductive connection plates 5d and projecting portions of the long-side wall 53d and the short-side wall 52d of the other conductive connection plate 5d are housed in the rectangular frame 37d.

In the present embodiment, with respect to the heater wire 4, the conductive connection plate 5d, and the snow-melting base 3d already installed with the conductive junction 7d, the radome body 2d is formed by injection molding in such a manner as to cover the heater wire laying surface 31 of the snow-melting base 3d and each side surface 341 forming a peripheral side surface of the snow-melting base 3d. Furthermore, a connection end of a power supply cable 6d is arranged next to the long-side wall 53d of the conductive connection plate 5d inside the rectangular frame 37d. The power supply cable 6d and the conductive connection plate 5d are electrically and mechanically connected to each other through a conductive junction 70d composed of solder, a brazing material, a conductive adhesive agent (ECA), or anisotropic conductive paste (ACP), for example.

Furthermore, the rectangular frame 37d is filled with sealing resin 9d poured in such a manner as to bury the conductive junction 70d as a connection between the power supply cable 6d and the conductive connection plate 5d. It is possible to expose the conductive junction 70d as a connection between the power supply cable 6d and the conductive connection plate 5d without filling the rectangular frame 37d with the sealing resin 9d. It is also possible to connect the power supply cable 6d to the short-side wall 52d of the conductive connection plate 5d.

In the radome 1d according to the fifth embodiment, it is possible to connect the power supply cable 6d by an appropriate method to the conductive connection plate 5d projecting from the outer surface 33 corresponding to the back surface of the snow-melting base 3d toward the vehicle-mounted radar device 10. This makes it possible to increase a degree of freedom in a way of forming electrical connection between the heater wire 4 and the power supply cable 6d. Furthermore, burying the conductive junction 70d as a connection between the power supply cable 6d and the conductive connection plate 5d using the sealing resin 9d allows water resistance, weather resistance, corrosion resistance, and damage resistance to be increased further at the connection. It is also possible to fulfill comparable effects using configurations corresponding to those of the first embodiment.

[Radome According to Sixth Embodiment]

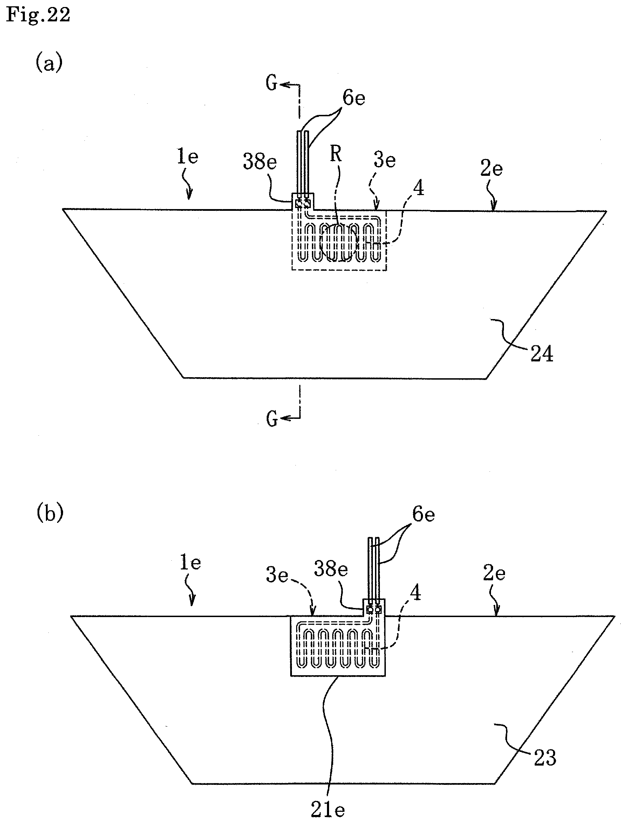

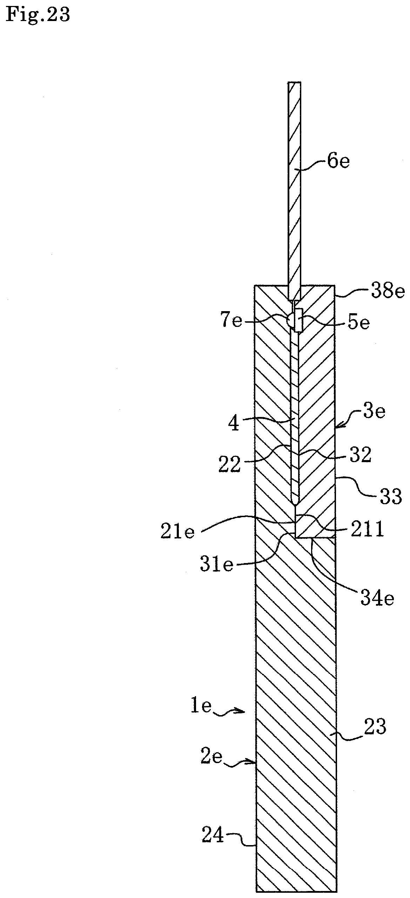

As shown in Figs. 22 and 23, a radome 1e according to a sixth embodiment of the present invention includes a radome body 2e formed of an electromagnetic-wave transmitting first resin base material, and a snow-melting base 3e formed of an electromagnetic-wave transmitting second resin base material having a refractive index mutually matching the refractive index of the first resin base material of the radome body 2e. Configurations or modifications not particularly mentioned in the sixth embodiment are similar to the configurations or modifications of the radome 1 according to the first embodiment.

In a local region of the radome body 2e covering the electromagnetic-wave transmitting region R, a recess part 21e is formed in such a manner as to be recessed in an electromagnetic-wave transmitting direction in which an electromagnetic wave such as a millimeter wave emitted from the vehicle-mounted radar device 10 is transmitted through the radome body 2e. The recess part 21e is provided as a cutout in a peripheral edge of the radome body 2e. The snow-melting base 3e, which is formed in near conformity with the shape of the recess part 21e, is fitted in the recess part 21e.

The snow-melting base 3e is provided with a tab 38e projecting locally to a lateral side. The tab 38e has a heater wire laying surface 31e where a metallic conductive connection plate 5e is secured through adhesion, for example. One connection end and the other connection end of the heater wire 4 are both introduced in such a manner as to be placed on the conductive connection plate 5e. One connection end and the other connection end of a power supply cable 6e such as a wire harness are both introduced in such a manner as to be placed on the conductive connection plate 5e. Electrical and mechanical connections are established between the one connection end of the heater wire 4 and the one connection end of the power supply cable 6e and between the other connection end of the heater wire 4 and the other connection end of the power supply cable 6e through a conductive junction 7e.

At the tab 38e, the power supply cable 6e electrically connected to the heater wire 4 through the conductive junction 7e is pulled out to a lateral side of the radome body 2e, and in the illustrated example, pulled out in a direction vertical to an electromagnetic-wave emitting direction from the vehicle-mounted radar device 10.

In the present embodiment, with respect to the heater wire 4, the conductive connection plate 5e, the power supply cable 6e pulled out to a lateral side, and the snow-melting base 3e already installed with the conductive junction 7e, the radome body 2e is formed by injection molding in such a manner as to cover the heater wire laying surface 31e of the snow-melting base 3e and a side surface 341e of the snow-melting base 3e in each of three directions other than the direction in which the power supply cable 6e is pulled out. Each side surface 341e stands vertically from the heater wire laying surface 31e.

Furthermore, in the present embodiment, the surface 23 of the radome body 2e on a forming side of the recess part 21e and a principal area of the outer surface 33 of the snow-melting base 3e are substantially flush with each other. In the illustrated example, the surface 23 of the radome body 2e on the forming side of the recess part 21e and the outer surface 33 of the snow-melting base 3e as a whole are substantially flush with each other.

In the example described in the sixth embodiment, the surface 24 of the radome body 2e on a non-forming side of the recess part 21e is arranged on a side to be visually recognized from outside, in other words, on an external side such as an external side of a vehicle body of an automobile, and the surface 23 of the radome body 2e on the forming side of the recess part 21e is arranged on the side of a radar device such as the vehicle-mounted radar device 10. Alternatively, the surface 23 of the radome body 2e on the forming side of the recess part 21e may be arranged on a side to be visually recognized from outside, and the surface 24 of the radome body 2e on the non-forming side of the recess part 21e may be arranged on the side of a radar device such as the vehicle-mounted radar device 10.

In the radome 1e according to the sixth embodiment, it is possible to supply power reliably to the heater wire 4 without damaging visibility of the radome 1e both in a case where the surface 23e of the radome body 2e on the forming side of the recess part 21e and the snow-melting base 3e are pointed to the outside of a vehicle and in a case where the surface 23e of the radome body 2e on the forming side of the recess part 21e and the snow-melting base 3e are pointed to the inside of the vehicle. It is also possible to fulfill comparable effects using configurations corresponding to those of the first embodiment.

[Scope Encompassed by the Invention Disclosed in this Description]

The invention disclosed in this description includes, in addition to the configurations recited as respective inventions or the embodiments, a matter defined by modifying any of these partial configurations to other configurations disclosed in this description within an applicable range, a matter defined by adding any other configurations disclosed in this description to these partial configurations, or a matter defined into a generic concept by cancelling any of these partial configurations within a limit in which a partial operational effect is fulfilled. The invention disclosed in this description further includes modifications and added matters shown below.

For example, while the radome bodies 2, 2a, 2b, 2c, 2d, and 2e according to the above-described first to sixth embodiments are injection-molded materials, the radome according to the present invention may use a radome body other than an injection-molded material. If the radome body not as an injection-molded material is used, the radome body and the snow-melting base can be secured to each other by an appropriate way within an applicable range such as double-sided tape or an adhesive agent. Furthermore, the shape of the surface of the radome body on the forming side of the recess part or the shape of the surface of the radome body on the non-forming side of the recess part may be determined appropriately and may be a planar shape or a curved plane, for example. Moreover, the electrical connection between the heater wire and the power supply cable in the radome according to the present invention may be established by an appropriate configuration within the range of the purport of the present invention in addition to the examples of the first to sixth embodiments.

While the radomes 1, 1a, 1b, 1c, 1d, and 1e according to the above-described embodiments are radomes for vehicle-mounted radar device, the radome according to the present invention is not limited to a radome for vehicle-mounted radar device but can be an appropriate radome to be arranged on the side of electromagnetic-wave emission from a radar device.

In the radome according to the present invention, it is also preferable that a depression and a projection be formed at at least a partial side surface of the snow-melting base and a depression and a projection at the radome body as an injection-molded material be fitted to the depression and the projection at the side surface of the snow-melting base, thereby securing the radome body and the snow-melting base to each other. In this configuration, the radome body and the snow-melting base are secured to each other with the depression and the projection at the radome body as the injection-molded material and the depression and the projection at the side surface of the snow-melting base fitted to each other. This provides anchor effect to allow the snow-melting base to be secured with still higher strength to the radome body.

In a radome 1f according to a seventh embodiment corresponding to a modification of the first embodiment, for example, a snow-melting base 3f is fitted in a recess part 21f of a radome body 2f, a projection 345f projecting to a lateral side is formed at a side surface 344f of the snow-melting base 3f, and the projection 345f at the snow-melting base 3f and a depression at the side surface 344f of the snow-melting base 3f other than the projection 345f are fitted to a depression and a projection at a side surface of the recess part 21f of the radome body 2f. The depression and the projection at the radome body 2f as an injection-molded material and the depression and the projection at the side surface 344f of the snow-melting base 3f are fitted to each other, thereby securing the radome body 2f and the snow-melting base 3f to each other.

As another example, in a radome 1g according to an eighth embodiment corresponding to a modification of the first embodiment, a snow-melting base 3g is fitted in a recess part 21g of a radome body 2g, a depression 347g inwardly depressed is formed at a side surface 346g of the snow-melting base 3g, and the depression 347g at the snow-melting base 3g and a projection at the side surface 346g of the snow-melting base 3g other than the depression 347g are fitted to a depression and a projection at a side surface of the recess part 21g of the radome body 2g. The depression and the projection at the radome body 2g as an injection-molded material and the depression and the projection at the side surface 346g of the snow-melting base 3g are fitted to each other, thereby securing the radome body 2g and the snow-melting base 3g to each other.

A heater unit secured to the electromagnetic-wave transmitting region of the snow-melting base in the radome according to the present invention is not limited to a heater unit composed of the heater wire 4 laid in the electromagnetic-wave transmitting region R of each of the snow-melting bases 3, 3a, 3b, 3c, 3d, and 3e according to the above-described first to sixth embodiments but is determined appropriately within the range of the purport of the present invention. Like in the seventh and eighth embodiments, for example, the heater unit may be composed of a resin sheet, and a planar heating element 40 with a heating material such as conductive paste spreading over a surface of the resin sheet. The planar heating element 40 is electrically connected to each of a power supply cable 6f and a power supply cable 6g.

INDUSTRIAL APPLICABILITY

The present invention is applicable to a radome for vehicle-mounted radar device, for example.

EXPLANATION OF REFERENCE SIGNS

1, 1a, 1b, 1c, 1d, 1e, 1f, 1g ... Radome
2, 2a, 2b, 2c, 2d, 2e, 2f, 2g ... Radome body
21, 21b, 21c, 21d, 21e, 21f, 21g ... Recess part
211 ... Bottom surface
22 ... Groove
23 ... Surface on forming side of recess part
24 ... Surface on non-forming side of recess part
251b, 252b ... Side surface
26b ... Latching part
261b ... Large-diameter portion

3, 3a, 3b, 3c, 3d, 3e, 3f, 3g ... Snow-melting base

31, 31e ... Heater wire laying surface

32 ... Groove

33 ... Outer surface

34, 341, 342b, 343b, 341e, 344f, 346g ... Side surface

345f ... Projection

347g ... Depression

35b ... Latching hole

351b ... Large-diameter portion

361c, 362c, 361d, 362d ... Engagement hole

37d ... Rectangular frame

38e ... Tab

4 ... Heater wire

40 ... Planar heating element

5, 5c, 5d, 5e ... Conductive connection plate

51c, 51d ... Substrate

52c, 52d ... Short-side wall

53c, 53d ... Long-side wall

6, 6a, 6b, 6c, 6d, 6e, 6f, 6g ... Power supply cable

61c ... Connector

62c ... Contact spring

63c ... Connector

7, 7c, 7d, 70d, 7e ... Conductive junction

8 ... Rubber stopper

9d ... Sealing resin

10 ... Vehicle-mounted radar device

R ... Electromagnetic-wave transmitting region

**Claims**

1. A radome comprising:

   a radome body formed of an electromagnetic-wave transmitting first resin base material;
   a snow-melting base formed of an electromagnetic-wave transmitting second resin base material having a refractive index mutually matching the refractive index of the first resin base material; and
   a heater unit secured to an electromagnetic-wave transmitting region of the snow-melting base, wherein
   a recess part recessed in an electromagnetic-wave transmitting direction is formed in a local region of the radome body covering the electromagnetic-wave transmitting region, and
   the snow-melting base is fitted in the recess part in such a manner as to bury the heater unit internally.

2. The radome according to claim 1, wherein
   a surface of the radome body on a forming side of the recess part and a principal area of an outer surface of the snow-melting base are substantially flush with each other.

3. The radome according to claim 1, wherein
   a surface of the radome body on a non-forming side of the recess part is arranged on a side to be visually recognized from outside, and a surface of the radome body on a forming side of the recess part is arranged on the side of a radar device.

4. The radome according to claim 3, wherein

   the heater unit is composed of a heater wire laid in the electromagnetic-wave transmitting region of the snow-melting base, and
   the heater wire is directly secured to the radome body.

5. The radome according to claim 3 or 4, wherein

   a power supply cable electrically connected to the heater unit is pulled out toward the radar device while the power supply cable is separated from a side surface of the snow-melting base, and
   the radome body as an injection-molded material is secured to an outer periphery of the power supply cable.

6. The radome according to claim 3 or 4, wherein

   a power supply cable electrically connected to the heater unit is pulled out toward the radar device while the power supply cable is secured to a side surface of the snow-melting base, and
   the radome body as an injection-molded material is secured to the power supply cable and to the side surface of the snow-melting base to which the power supply cable is secured.

7. The radome according to claim 3 or 4, wherein
   a conductive connection plate electrically connected to a power supply cable projects from a back surface of the snow-melting base toward the radar device while the conductive connection plate is electrically connected to the heater unit.

8. The radome according to claim 3 or 4, wherein

   the snow-melting base is provided with a latching hole penetrating the snow-melting base in an inward-outward direction, and
   the latching hole is filled with the radome body as an injection-molded material to secure the radome body and the snow-melting base to each other.

9. The radome according to any one of claims 1 to 4, wherein

   at least a partial side surface of the snow-melting base is configured as a slanting surface, and the radome body as an injection-molded material is secured to the slanting surface to provide securing between the radome body and the snow-melting base.

10. The radome according to any one of claims 1 to 4, wherein

    a depression and a projection are formed at the at least a partial side surface of the snow-melting base, and
    the radome body and the snow-melting base are secured to each other in such a manner as to fit a depression and a projection at the radome body as an injection-molded material to the depression and the projection at the side surface of the snow-melting base.

11. The radome according to any one of claims 1 to 4, wherein

    the recess part is provided as a cutout in a peripheral edge of the radome body, and
    a power supply cable electrically connected to the heater wire is pulled out to a lateral side of the radome body.

12. The radome according to any one of claims 1 to 4, wherein
    the heater unit is composed of a heater wire laid in and secured to the electromagnetic-wave transmitting region of the snow-melting base, and the snow-melting base is composed of a transparent resin.

Fig.1

(a)

(b)

Fig.2

Fig.3

Fig.4

Fig.5

Fig.6

Fig.7

Fig.8

Fig.9

(a)

(b)

Fig.10

Fig.11

Fig.12

Fig.13

(a)

(b)

Fig.14

Fig.15

Fig.16

Fig.17

Fig.18

(a)

1d

E

R

2d

F

F

24

3d

E

4

(b)

1d

4

37d

2d

23

3d

21d

Fig.19

Fig.20

Fig.21

Fig.22

(a)

(b)

Fig.23

Fig.24

(a)

23
2f
1f
344f
3f
211
33
21f
6f
40
345f
24

(b)

23
2g
1g
346g
3g
211
33
21g
6g
40
347g
24

## INTERNATIONAL SEARCH REPORT

International application No.

**PCT/JP2023/030386**

**A.    CLASSIFICATION OF SUBJECT MATTER**

*G01S 7/03*(2006.01)i; *B60R 13/00*(2006.01)i; *B60S 1/62*(2006.01)i; *G01S 7/40*(2006.01)i; *H01Q 1/42*(2006.01)i
FI:    G01S7/03 246; G01S7/40 143; H01Q1/42; B60S1/62 110C; B60S1/62 120Z; B60R13/00

According to International Patent Classification (IPC) or to both national classification and IPC

**B.    FIELDS SEARCHED**

Minimum documentation searched (classification system followed by classification symbols)

G01S7/00-7/42, 13/00-13/95; B60R13/00; B60S1/62; H01Q1/42

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2022-32674 A (SAKAE RIKEN KOGYO CO LTD) 25 February 2022 (2022-02-25) paragraphs [0011]-[0030], fig. 1-9 | 1, 9, 12 |
| Y | paragraphs [0011]-[0030], fig. 1-9 | 2, 10 |
| A | paragraphs [0011]-[0030], fig. 1-9 | 3-8, 11 |
| Y | JP 2017-184852 A (KOJIMA KK) 12 October 2017 (2017-10-12) paragraphs [0020]-[0022], fig. 3 | 2, 10 |
| Y | JP 2020-60406 A (TOYODA GOSEI CO., LTD.) 16 April 2020 (2020-04-16) paragraph [0071], fig. 3 | 10 |
| A | JP 2020-139860 A (SANKEI GIKEN KOGYO CO LTD) 03 September 2020 (2020-09-03) entire text, all drawings | 1-12 |
| A | JP 2022-153712 A (FALTEC CO LTD) 13 October 2022 (2022-10-13) entire text, all drawings | 1-12 |

☐ Further documents are listed in the continuation of Box C.    ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **06 September 2023** | **19 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

EP 4 614 182 A1

## INTERNATIONAL SEARCH REPORT
### Information on patent family members

International application No.

**PCT/JP2023/030386**

| Patent document cited in search report | | | Publication date (day/month/year) | Patent family member(s) | Publication date (day/month/year) |
|---|---|---|---|---|---|
| JP | 2022-32674 | A | 25 February 2022 | (Family: none) | |
| JP | 2017-184852 | A | 12 October 2017 | (Family: none) | |
| JP | 2020-60406 | A | 16 April 2020 | WO 2020/075539 A1 paragraph [0071], fig. 3 | |
| JP | 2020-139860 | A | 03 September 2020 | WO 2020/175111 A1 entire text, all drawings | |
| JP | 2022-153712 | A | 13 October 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7081414 B